# EUROPEAN PATENT SPECIFICATION

(11) **EP 2 594 781 B1**
(45) Date of publication and mention of the grant of the patent: **03.04.2019**
(21) Application number: 12189659.1
(22) Date of filing: 24.10.2012
(51) Int. Cl.: F03B 13/20, F03B 13/18, B63B 35/44

(54) **Wave power plant**
Wellenkraftwerk
Centrale houlomotrice

(30) Priority: 17.11.2011 FI 20116152
(43) Date of publication of application: 22.05.2013
(73) Proprietor: Wello Oy, 02380 Espoo (FI)
(72) Inventor: Paakkinen, Heikki, 02380 Espoo (FI)
(74) Representative: LEITZINGER OY

(56) References cited:
- WO-A1-2010/034888
- US-A- 524 490
- US-A- 4 266 143
- US-A- 5 443 361
- US-A1- 2011 012 358

## Description

The present invention relates to a wave power plant, comprising a floating body and means for converting the wave energy received by the body into electric power, wherein the body is a mainly vertical wall, which, in use, is for the most part below the water level W, but with its upper part above the water level, and that the wave power plant comprises anchoring means arranged in the lower part of the body, the anchoring means including an anchoring mass suspended in an articulated manner on a downwards extending elongated anchoring device connected to the body in an articulated manner, in connection with which anchoring mass are arranged elongated anchoring devices extending transversely forwards against the incoming direction of the waves and backwards in the incoming direction of the waves, the anchoring devices being connected to the bottom of the installation site of the wave power plant.

The aim of the present invention is to provide an improved wave power plant by means of which the output of the wave power plant can be increased and its operational preconditions in varying wave conditions can be improved.

To achieve this aim, the wave power plant according to the present invention is characterised in that the upper part of the front side of the cross-section of the body opposite to the main incoming direction (A) of the waves is designed to incline forwards and the lower part to incline backwards, in such a way that the propagating wave meets the upper and lower parts at different stages of the wave, whereupon the lower part tends to move mainly in the opposite direction with respect to the upper part.

The body of the wave power plant is preferably dimensioned in such a way that its draught is 0.5 x the length of the smallest functional wave desired. The upper surface of the body is preferably closed and even.

In the solution according to the invention, the forces and movements are opposite in the upper and lower part of the device, thus generating a large movement and high force used further to produce electric power, for example by means of a rotator/gyratory generator, which is rotated by utilising gravitation and gyro force. From the publications EP 1 384 824 B1 and WO2005/071257 A1 is known a solution in which the moment of momentum of the rotation of the gyro is used to generate the torque of the rotator when the gyro shaft is rolled by means of the waves. The problem with these known wave power plants is that the torque enhancing the rotation of the rotator shaft is received on it only for a short time, twice during a full rotation of the rotator, whereas at the intermediate stages, when the gyro shaft turns, the moment of the momentum of the rotation of the gyro generates a torque which inclines the body. If the body is able to incline in the direction of the torque, it will perform unnecessary work and brake the rotation of the rotator. It is thus difficult to make the rotator rotate in step with the waves.

From publications US 20110012358 A1 and US 4,266,143 are known wave power plants which are provided with the above disclosed anchoring means. The round shaped bodies of these known wave power plants, however, are not ideal for utilizing the internal flows of the waves in order to move the upper and lower parts of the body in the opposite directions.

The invention is described in greater detail in the following, with reference to the accompanying drawings, in which:
- Figure 1: shows a diagrammatic oblique front view of the body of the wave power plant according to one embodiment of the invention;
- Figure 2: shows an oblique rear view of the body according to Figure 1, and
- Figure 3: shows a diagrammatic view in principle of an implementation of power plant units positioned in the body.

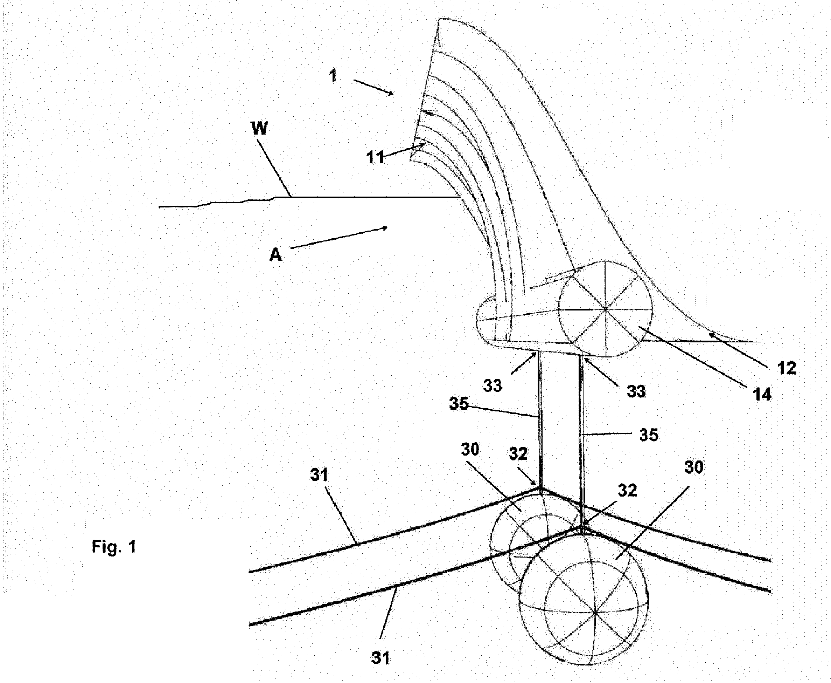

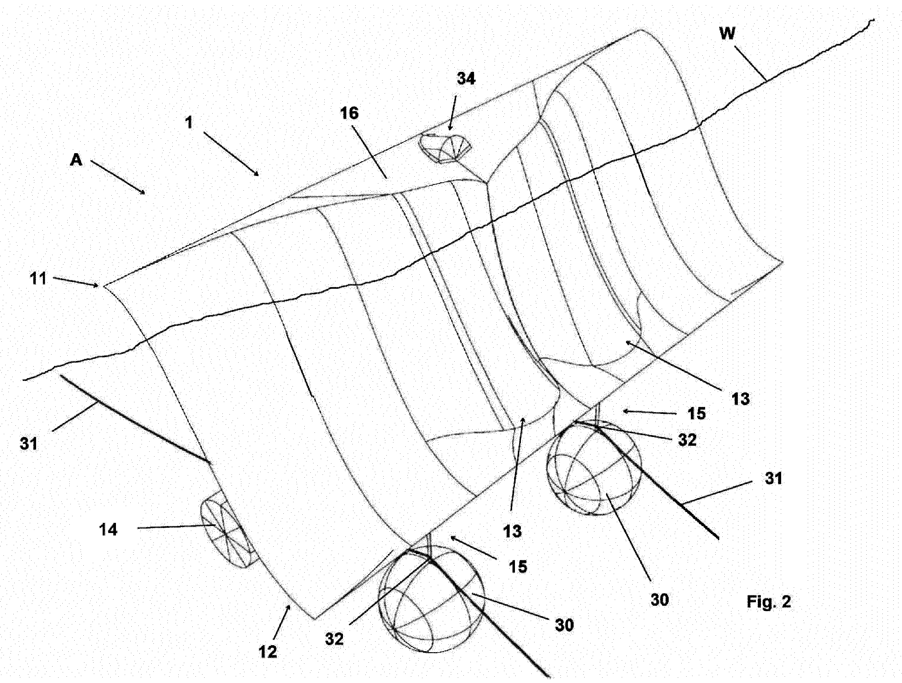

Figures 1 to 2 show a diagrammatic view in principle of a preferred embodiment of the body 1 of the wave power plant. The body 1 is a wall which is mainly vertical, or when in operation, inclined on average in the incoming direction of the wave, and which is for the most part below the water level W, but with its upper part above the water level. The wall-type shape and mainly vertical or inclined position converts the flow energy of the waves into kinetic energy efficiently and over a large surface area. The draught of the body 1 is preferably dimensioned to correspond to 0.5 x the length of the smallest functional wave desired, thus equalling the movement of the said wave in the vertical direction. In the exemplary implementation according to the Figures, the upper part 11 of the front side of the body 1 opposite to the main incoming direction A of the waves is designed to curve forward and the lower part 12 to curve backwards, thus forming a gently sloping letter S in cross-section, in such a way that the propagating wave meets the upper and lower part wave at different stages, whereby as the wave propagates, the upper end and lower end of the device are mostly at different stages of the wave. In these areas are then generated forces and movement in opposite directions due to buoyancy and the kinetic movement (flow) of the wave. In a small wave, there is practically no wave motion in the lower part of the device, whereupon the stationary water resists the movement of this part. The purpose of the design of the upper part is that the variation in buoyancy caused by the vertical movement of the wave together with the pressure variation caused by the kinetic movement will move in stages in different directions: up, to the rear, down and to the front. When the lower part is in contact with a part of a wave which is at least mostly at a different stage, the force generated by this kinetic pressure change (flow) moves it mainly in the opposite direction compared to the upper part. The upper surface 16 of the body 1 is made closed.

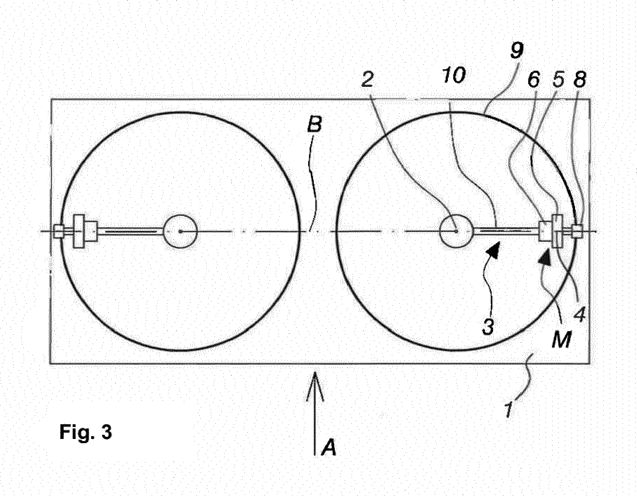

Reference numeral 13 designates the location of a power plant unit described in greater detail, for example, in connection with Figure 3, of which units there are two in the embodiment shown. The anchoring is preferably fixed to a low-movement position 33 on the lower part of the device, whereby the anchor forces and movements are easy to control. The anchor force participates in bringing about the movement of the body/ generating the force and its energy is recovered. In the example case, the anchoring is implemented with weights 30 suspended below the device. In the example embodiment there are two weights 30 spaced apart in the lateral (longitudinal) direction of the body. The number of weights can be different than two. In connection with the weights are arranged transversely, i.e. forwards against the incoming direction of the waves and backwards in the incoming direction of the waves, extending elongated anchoring means 31 which are connected to the bottom of the installation site of the wave power plant. The weights give the anchoring flexibility and form a lower pivot 32 for the system in big waves. In small waves, the pivot is at the anchoring attachment point 33 on the body. With this arrangement, the system adjusts to the energies generated by waves of different sizes. The movements in the system are very small and also the variations in force remain moderate. In addition to the spherical shape shown in the Figures, the weights of the anchoring may also have, for example, a flat or discform shape, which enhances the utilisation of the anchor force in creating movement and producing energy.

The anchoring weights 30 are preferably hollow, for example, filled partly with concrete and partly with air, whereby they float during transport. When the cavity is filled with water, the weights sink and at the same time pull the floating power plant into the correct position. When the device is removed, the cavities of the weights are filled with air, whereby they will again float to facilitate transport. The power plant itself will then also rise close to the surface, into a horizontal position, in which case the draught is small, thus facilitating, for example, docking. The anchor forces are utilised in energy production. The force is mainly opposite to the direction of movement (force) of the upper front part of the body, whereby it enhances energy production for its part.

The interface of the electric cable (not shown) with the body is preferably also located in a low-movement position in the vicinity of the anchoring point and led to the bottom of the sea following the anchor lines to minimise movements, where its wear is slight. The device may be made large because its width is selectable. The output is as high as several megawatts, the irregularity of the wave forming a certain limit to the width of the body. The height of the device may be, for example, within the range from 10 to 40 m, preferably about 15 to 25 m, and the length, for example, within the range from 30 to 100 m, preferably about 50 to 75 m. These are only examples of the dimensions of the device describing its order of magnitude for making high power output possible. A large size is possible because the forces are converted into electric power inside a closed body.

The counterforce of the wave force in generating the torque is gravitation and gyro force. Gravitation and gyro force alternate and occur simultaneously. The forces used to produce electricity (gravitational force, gyro force and variable acceleration in different directions generated by the wave motion) are internal to the closed body. This makes possible a simple mechanism which is protected from the marine atmosphere and sea water. There are no moving mechanisms outside the closed body.

The dimensions of the device in elevation and in the lateral direction are large compared to the size of the wave, whereby the opposite stages in the wave can be utilised. The device utilises simultaneously the changing buoyancy and the kinetic energy of the wave in all directions.

The device preferably has a beaching ramp for safely receiving a service boat. Backwards from the upper part of the ramp extends a floating rope which is used via a winch to facilitate beaching. On the incoming direction side of the wave, in front of the ramp, is a shield 34 through which a service entrance is provided.

In one preferred embodiment, in the lower part of the body is provided a water tank 14, by means of which the floating position can be adjusted. When transported to the site, the tank is empty and the device floats on its face and low. The water tank 14 may have a round cross-section, its axis being horizontal in the longitudinal direction, that is, perpendicular to the direction of propagation of the wave. In this way it will not form significant inertia or use energy. When the device rolls with the wave, the water in the tank will not follow to any significant degree.

The fringe side of the middle section of the body is convex and designed in such a way that when the device moves with the wave, the rear side will not "form" a wave, that is, it will not transfer energy back to the water. The end areas of the body are flat, thus utilising the suction of the wave circulating the device. This enlarges the capture width.

The system according to the present invention adapts as a whole to the motions of waves of different sizes so that the system will not have to resist the high forces of wave motions.

In the embodiment shown in Figure 3, the wave power plant comprises an elongated floating body 1 which rolls to and fro around the elongated roll axis B of the body. The incoming direction A of the waves is perpendicular to the roll axis B of the body 1. The body 1, therefore, rolls to and fro with respect to one axis B. On the body are positioned two or more power plant units which convert wave energy into electricity. Both power plant units comprise a rotator 3 which rotates on average around a mainly vertical rotator shaft 2. The rotator 3 comprises a gyro 5 which rotates on average around a mainly horizontal gyro shaft 4. The gyro 5 and the gyro shaft 4 rotate around the rotator shaft 2 with the rotator 3. The generator 6 is connected to rotate together with the gyro. The rotator 3 comprises a mass M, the centre of gravity of which is at a distance from the rotator shaft 2, whereupon when the body inclines, the mass M and gyro 5 alternately generate a parallel torque on the rotator 3, as described in greater detail below. The mass M is connected to the rotator shaft 2 with an arm 10 essentially parallel to the axis of rotation 4 of the gyro. The gyro 5 and the generator 6 form the dead mass M partly or completely.

The generator 6 is located on the gyro shaft 4 or connected to be driven by the gyro shaft. The outer end of the rotator 3, which is far from the rotator shaft 2, is provided with a small wheel 8 on which the outer end of the rotator rests and which rotates without sliding along a circular track 9 which surrounds the rotator shaft 2 coaxially. The wheel 8, the gyro 5 and the generator 6 are connected to rotate together. They may be on the same shaft or connected with appropriate transmission ratios to one another. In this embodiment, the speed of rotation of the gyro is constant with respect to the speed of rotation of the rotator 3 around the rotator shaft 2 and correspondingly constant with respect to the period of the waves. In this embodiment, only one generator 6 is required in each power plant unit. The gyro 5 and the generator 6 may be located close to the outer end of the rotator, whereby they form an essentially part of the mass M which rotates the rotator on the basis of gravity, when the mass attempts to move in the direction in which the body is inclined. The moment of momentum of the rotating gyro 5 also generates a torque enhancing the rotation of the rotator 3 when the rolling turns the gyro shaft 4, whereupon the precession force generates a torque in the rotator, the direction of which is at a 90 degree angle to the direction of turning. The direction of rotation of the gyro must be such that the gyro, as it were, rotates/advances in the direction of rotation of the rotator.

When the angle of inclination of the body 1 is at its largest and its rolling direction turns, the rotator preferably has the direction shown in Figure 3, which is the same as the direction of the roll axis B. In this case, the angle between the direction of the rotator and direction of inclination of the body, that is, the so-called phase lag is 90 degrees. In other words, the rotator is at a 90 degree lag (behind) with respect to the inclination of the body. The mass M then gives the best torque due to the effect of gravity. The gyro 5, on the other hand, does not affect the torque of the rotator 3 on the track 9 plane at this stage, because the roll axis B and the gyro shaft 4 are parallel. When the rotator 3 continues to rotate towards the direction in which the gyro shaft 4 is perpendicular to the roll axis B, the rolling motion turns the gyro shaft increasingly faster. The change of direction of the gyro shaft 4 is at its fastest when the shaft 4 is perpendicular to the roll axis B, whereupon the moment of the gyro force pushes the rotator with its maximum force in the direction of the track 9. The rolling motion of the body is then at its fastest and the plane of the track is essentially horizontal. In that case, the mass M does not increase the torque. The torques of the gyro force and the mass, therefore, alternate at 90 degree angular intervals and are, respectively, at their maximum at angular intervals of 180 degrees, that is, both twice during one revolution of the rotator.

The most powerful operation is thus achieved when the said phase lag is adjusted to 90 degrees. In the intermediate forms, the moment produced by the mass and the moment produced by the gyro on the rotator is proportional to the sine of the phase lag. The phase lag can be adjusted by adjusting the generator 6 load. In the operation of the wave power plant, its output can be adapted to the output of the wave available by varying the phase lag between 0 to 90 degrees, and in addition by adjusting the speed of rotation of the gyro.

The vertical axis of the rotator/gyro generator can be placed slightly inclined in the incoming direction of the wave, whereby the accelerations of the up-and-down motion caused by the wave take part in generating the torque.

The means for converting the electric power received by the body are preferably located in the vicinity of the lower rear part of the roll axis B. An alternative location for these means is in the upper part of the body, whereupon in addition to the said gravitational force and gyro force, the accelerations complying with the rolling of the body produce an additional moment on the rotator.

## Claims

1. A wave power plant, comprising a floating body (1) and means for converting the wave energy received by the body into electric power, wherein the body (1) is a mainly vertical wall, which, in use, is for the most part below the water level W, but with its upper part above the water level, and the wave power plant comprises anchoring means arranged in the lower part of the body, the anchoring means including an anchoring mass (30) suspended in an articulated (32) manner on a downwards extending elongated anchoring device (35) connected to the body (1) in an articulated manner (33), in connection with which anchoring mass are arranged elongated anchoring devices (31) extending transversely forwards against the incoming direction of the waves and backwards in the incoming direction of the waves, the anchoring devices (31) being connected to the bottom of the installation site of the wave power plant, **characterised in that** the upper part (11) of the front side of the cross-section of the body (1) opposite to the main incoming direction (A) of the waves is designed to incline forwards and the lower part (12) to incline backwards, in such a way that the propagating wave meets the upper and lower parts at different stages of the wave, whereupon the lower part tends to move mainly in the opposite direction with respect to the upper part.

2. A wave power plant as claimed in claim 1, **characterised in that** the means for converting the wave energy received by the body into electric power are located inside the frame part as a closed structure.

3. A wave power plant as claimed in claim 2, **characterised in that** the means for converting the wave energy received by the body (1) into electric power are located (13) in the lower rear part of the body, in the vicinity of roll axis.

4. A wave power plant as claimed in claim 1, **characterised in that** the said front side is designed into a gently sloping letter S.

5. A wave power plant as claimed in any of the claims 1 to 4, **characterised in that** the upper surface (16) of the body (1) is made essentially even.

6. A wave power plant as claimed in any of the claims 1 to 5, **characterised in that** the draught of the body (1) is dimensioned to correspond to 0.5 x the length of the smallest functional wave desired.

7. A wave power plant as claimed in any of the claims 1 to 6, **characterised in that** in the lower part of the body (1) is provided a water tank (14) for adjusting the floating position of the wave power plant as desired.

8. A wave power plant as claimed in claim 7, **characterised in that** the water tank (14) is a cylindrical container extending in the lateral direction of the body (1).

9. A wave power plant as claimed in any of the claims 1 to 8, **characterised in that** as means for converting the wave energy received by the body into electric power are a rotator (3), which is supported on the body and rotates around an on average vertical rotator shaft (2), a gyro (5), which rotates around an on average horizontal gyro shaft (4), the gyro (5) and the gyro shaft (4) rotating around the rotator shaft (2) with the rotator, and at least one generator (6, 7), which is connected to rotate together with the gyro or the rotator, and that the rotator (3) comprises a mass (M), the centre of gravity of which is at a distance from the rotator shaft (2), whereupon when the body rolls, the mass and gyro alternately generate a parallel torque to rotate the rotator (3).

## Patentansprüche

1. Wellenkraftwerk, umfassend einen Schwimmkörper (1) und Mittel zum Umwandeln der vom Körper aufgenommenen Wellenenergie in Strom, wobei der Körper (1) eine im Wesentlichen vertikale Wand ist, welche bei Verwendung größtenteils unter dem Wasserspiegel W, jedoch mit seinem oberen Teil über dem Wasserspiegel liegt, und das Wellenkraftwerk ein Verankerungsmittel umfasst, das in dem unteren Teil des Körpers angeordnet ist, wobei das Verankerungsmittel eine Verankerungsmasse (30) enthält, die in einer schwenkbaren (32) Weise an einer sich nach unten erstreckenden länglichen Verankerungsvorrichtung (35) angehängt ist, die mit dem Körper (1) in einer schwenkbaren Weise (33) verbunden ist, wobei in Verbindung dieser mit der Verankerungsmasse längliche Verankerungsvorrichtungen (31) angeordnet sind, die sich quer nach vorne gegen die ankommende Richtung der Wellen und nach hinten in die ankommende Richtung der Wellen erstrecken, wobei die Verankerungsvorrichtungen (31) mit dem Boden des Installationsorts des Wellenkraftwerks verbunden sind, **dadurch gekennzeichnet, dass** der obere Teil (11) der vorderen Seite des Querschnitts des Körpers (1), der der ankommenden Hauptrichtung (A) der Wellen entgegengesetzt ist, ausgestaltet ist, um sich nach vorne zu neigen, und der untere Teil (12), um sich nach hinten zu neigen, derart, dass die sich ausbreitende Welle den oberen und den unteren Teil bei unterschiedlichen Phasen der Welle trifft, wodurch der untere Teil dazu neigt, sich hauptsächlich in die entgegengesetzte Richtung bezüglich des oberen Teils zu bewegen.

2. Wellenkraftwerk nach Anspruch 1, **dadurch gekennzeichnet, dass** die Mittel zum Umwandeln der vom Körper aufgenommenen Wellenenergie in Strom sich im Inneren des Rahmenteils als eine geschlossene Struktur befinden.

3. Wellenkraftwerk nach Anspruch 2, **dadurch gekennzeichnet, dass** die Mittel zum Umwandeln der vom Körper (1) aufgenommenen Wellenenergie in Strom sich in dem unteren hinteren Teil des Körpers in der Nähe einer Rollachse befinden (13).

4. Wellenkraftwerk nach Anspruch 1, **dadurch gekennzeichnet, dass** die vordere Seite in einen leicht geneigten Buchstaben S ausgestaltet ist.

5. Wellenkraftwerk nach einem der Ansprüche 1 bis 4, **dadurch gekennzeichnet, dass** die obere Oberfläche (16) des Körpers (1) im Wesentlichen gleichmäßig hergestellt ist.

6. Wellenkraftwerk nach einem der Ansprüche 1 bis 5, **dadurch gekennzeichnet, dass** der Zug des Körpers (1) bemessen ist, um 0,5 x der Länge der gewünschten kleinsten Funktionswelle zu entsprechen.

7. Wellenkraftwerk nach einem der Ansprüche 1 bis 6, **dadurch gekennzeichnet, dass** im unteren Teil des Körpers (1) ein Wassertank (14) vorgesehen ist, um die Schwimmstellung des Wellenkraftwerks wie gewünscht anzupassen.

8. Wellenkraftwerk nach Anspruch 7, **dadurch gekennzeichnet, dass** der Wassertank (14) ein zylindrischer Behälter ist, der sich in der lateralen Richtung des Körpers (1) erstreckt.

9. Wasserkraftwerk nach einem der Ansprüche 1 bis 8, **dadurch gekennzeichnet, dass** als Mittel zum Umwandeln der vom Körper aufgenommenen Wellenenergie in Strom ein Rotator (3), welcher am Körper angebracht ist und um eine durchschnittlich vertikale Rotatorwelle (2) rotiert, ein Gyrometer (5), welcher um eine durchschnittlich horizontale Gyrometerwelle (4) rotiert, wobei der Gyrometer (5) und die Gyrometerwelle (4) um die Rotatorwelle (2) mit dem Rotator rotieren, und mindestens ein Generator (6, 7), welcher angeschlossen ist, um zusammen mit dem Gyrometer oder dem Rotator zu rotieren, vorgesehen sind, und dass der Rotator (3) eine Masse (M) umfasst, dessen Gravitationszentrum mit einem Abstand von der Rotatorwelle (2) liegt, wodurch, wenn der Körper rollt, die Masse und das Gyrometer abwechselnd ein paralleles Drehmoment erzeugen, um den Rotator (3) zu rotieren.

## Revendications

1. Installation d'énergie houlomotrice comprenant un corps flottant (1) et un moyen pour convertir l'énergie houlomotrice reçue dans le corps en énergie électrique, dans lequel le corps (1) est une paroi essentiellement verticale qui, en utilisation, est pour la plus grande partie en-dessous du niveau d'eau W mais avec sa partie supérieure au-dessus du niveau d'eau, et l'installation houlomotrice comprend un moyen d'ancrage agencé dans la partie inférieure du corps, le moyen d'ancrage incluant une masse d'ancrage (30) suspendue de manière articulée (32) sur un dispositif d'ancrage (35) allongé s'étendant vers le bas connecté au corps (1) de façon articulée (33), en lien avec laquelle masse d'ancrage sont agencés des dispositifs d'ancrage (31) allongés s'étendant transversalement vers l'avant contre la direction entrante des vagues et vers l'arrière dans la direction entrante des vagues, les dispositifs d'ancrage (31) étant connectés au fond du site de montage de l'installation d'énergie houlomotrice, **caractérisé en ce que** la partie supérieure (11) de la face avant de la section transversale du corps (1) opposée à la direction entrante principale (A) des vagues est conçue pour s'incliner vers l'avant et la partie inférieure (12) pour s'incliner vers l'arrière, de telle façon que la vague qui se propage rencontre les parties supérieure et inférieure à différentes étapes de la vague, sur quoi la partie inférieure tend à se déplacer principalement dans la direction opposée par rapport à la partie supérieure.

2. Installation d'énergie houlomotrice selon la revendication 1, **caractérisée en ce que** le moyen pour convertir l'énergie houlomotrice reçue par le corps en énergie électrique est situé à l'intérieur de la partie de châssis en tant que structure fermée.

3. Installation d'énergie houlomotrice selon la revendication 2, **caractérisée en ce que** le moyen pour convertir l'énergie houlomotrice reçue par le corps (1) en énergie électrique est situé (13) dans la partie arrière inférieure du corps, à proximité de l'axe de roulis.

4. Installation d'énergie houlomotrice selon la revendication 1, **caractérisée en ce que** ladite face avant est conçue en une lettre S à pente douce.

5. Installation d'énergie houlomotrice selon l'une quelconque des revendications 1 à 4, **caractérisée en ce que** la surface supérieure (16) du corps (1) est essentiellement plane.

6. Installation d'énergie houlomotrice selon l'une quelconque des revendications 1 à 5, **caractérisée en ce que** le tirant du corps (1) est dimensionné pour correspondre à 0,5 fois la longueur de la plus petite vague fonctionnelle souhaitée.

7. Installation d'énergie houlomotrice selon l'une quelconque des revendications 1 à 6, **caractérisée en ce que** dans la partie inférieure du corps (1), il est prévu un réservoir d'eau (14) pour ajuster la position de flottement de l'installation d'énergie houlomotrice comme souhaité.

8. Installation d'énergie houlomotrice selon la revendication 7, **caractérisé en ce que** le réservoir d'eau (14) est un contenant cylindrique s'étendant dans la direction latérale du corps (1).

9. Installation d'énergie houlomotrice selon l'une quelconque des revendications 1 à 8, **caractérisée en ce qu'**en tant que moyen pour convertir l'énergie houlomotrice reçue dans le corps en énergie électrique, il y a un rotateur (3) qui est supporté sur le corps et tourne sur un arbre de rotateur (2) vertical en moyenne, un gyroscope (5) qui tourne sur un arbre de gyroscope (4) vertical en moyenne, le gyroscope (5) et l'arbre de gyroscope (4) tournant autour de l'arbre de rotateur (2) avec le rotateur, et au moins un générateur (6, 7) qui est relié pour tourner conjointement avec le gyroscope ou le rotateur, et que le rotateur (3) comprend une masse (M) dont le centre de gravité est à une distance de l'arbre de rotateur (2), sur quoi lorsque le corps roule, la masse et le gyroscope génèrent alternativement un couple parallèle pour faire tourner le rotateur (3).
